# EUROPEAN PATENT APPLICATION

(11) **EP 4 717 078 A1**
(43) Date of publication of application: **01.04.2026**
(21) Application number: 24810648.6
(22) Date of filing: 21.02.2024
(51) Int. Cl.: A01K 1/00, A01K 31/22, F24F 7/06

(54) **POULTRY HOUSE AND METHOD FOR CONTROLLING CIRCULATION OF AIR IN POULTRY HOUSE**

(30) Priority: 22.05.2023 JP 2023083988
(71) Applicant: Alps Alpine Co., Ltd., Tokyo 145-8501 (JP)
(72) Inventor: WAGA, Satoshi, Tokyo 145-8501 (JP); TAKAI, Daisuke, Tokyo 145-8501 (JP); TAKETANI, Hiroaki, Tokyo 145-8501 (JP)
(74) Representative: Maiwald GmbH
(86) International application number: PCT/JP2024/006242
(87) International publication number: WO 2024/241640

(57) **Abstract**

A poultry house 1 according to the invention includes a circulation device 2 configured to generate wind to circulate air in the poultry house 1, a plurality of environmental sensors 31 configured to measure gas concentrations, an estimation unit 42 configured to estimate a high-concentration region in which the gas concentration is higher than in surrounding regions in the poultry house 1 based on the gas concentrations measured by the environmental sensors 31 at a plurality of measurement points and the positions of the measurement points of the environmental sensors 31, and a control unit 43 configured to control the circulation device to increase air volume in the high-concentration region. Accordingly, the environment inside the poultry house can be maintained in a good condition without using heat exchangers that require high installation costs and without drawing in cold outside air when temperature outside the poultry house is low.

## Description

### Technical Field

The present invention relates to a poultry house and a method of controlling air circulation in a poultry house.

### Background Art

Poultry houses for raising chickens for meat or egg production include open poultry houses with windows and little separation between the inside and outside of the poultry houses, and windowless poultry houses (no-window houses) with no windows. Such windowless poultry houses are equipped with facilities for controlling environmental conditions such as light, temperature, and ventilation, and can control the environmental conditions inside the poultry houses to promote the growth of chickens and egg production. Accordingly, windowless poultry houses are preferable in terms of productivity.

However, ventilation in such windowless poultry houses is regulated at lower levels compared to that in open poultry houses, and accordingly, if gases harmful to the health of chickens are produced, gas concentrations inside the poultry houses tend to rise more readily. Examples of such gases include carbon dioxide from heating equipment and ammonia gas from chicken manure. High concentrations of these gases contribute to higher chicken mortality in poultry houses.

Accordingly, when the concentration of a harmful gas in a poultry house exceeds a predetermined value, typically, a ventilation system for the entire poultry house is activated to reduce the gas concentration to maintain air quality inside the poultry house. However, if such a ventilation system for the entire poultry house is operated during winter when the temperature inside and outside the poultry house differs, cold outside air is drawn in and warm air inside the poultry house is exhausted, and thus the temperature inside the poultry house is reduced. In addition, it takes time for the temperature inside the poultry house to return to the level before the ventilation. Such a reduction in temperature inside the poultry house adversely affects chicken growth and other related aspects, and this causes a decrease in productivity. Accordingly, for example, Patent Literature 1 proposes a poultry house that includes a ventilation system that uses heat exchangers. This poultry house includes an outside air inlet port that draws outside air outside the poultry house into the poultry house via a heat-exchange element, and an inside air outlet port that releases inside air inside the poultry house to the outside of the poultry house via the heat-exchange element.

### Citation List

### Patent Literature

PTL 1: Japanese Unexamined Patent Application Publication No. 2018-166484

### Summary of Invention

### Technical Problem

The poultry house described in Patent Literature 1 provides ventilation via the heat-exchange element to suppress temperature decrease in the poultry house that adversely affects the growth of chickens and other related aspects. However, an average-sized poultry house has a large volume of approximately 50 m × 20 m × 4 m = 4,000 m³. Therefore, the installation of heat exchangers capable of controlling the air temperature inside poultry houses requires high costs. Accordingly, the present invention provides a poultry house that can maintain a good environment inside a poultry house without using heat exchangers that require high installation costs and without drawing in cold outside air when temperature outside the poultry house is low, and a method of controlling air circulation inside a poultry house.

### Solution to Problem

As means for solving the aforementioned problem, the present invention is provided with the following configurations. A poultry house includes a circulation device configured to generate wind to circulate air in the poultry house, an environmental sensor configured to measure gas concentration, an estimation unit configured to estimate a high-concentration region in which the gas concentration is higher than in surrounding regions in the poultry house based on the gas concentrations measured by the environmental sensor at a plurality of measurement points and the positions of the measurement points of the environmental sensor, and a control unit configured to control the circulation device to increase air volume in the high-concentration region.

By using an environmental sensor, gas concentrations at different measurement points in a poultry house are measured and a high-concentration region in which the gas concentration is high is estimated. Then, a circulation device is controlled to increase the air volume in the high-concentration region such that the airflow rate in the high-concentration region is increased to diffuse the gas. This configuration enables the suppression of locally elevated concentrations of toxic gas. Accordingly, chicken mortality can be reduced without drawing in outside air through ventilation. In addition, even when the temperature outside the poultry house is low, there is no need to draw in cold outside air to maintain the air quality inside the poultry house, and thus adverse effects on chicken growth caused by a decrease in temperature in the poultry house can be suppressed.

The environmental sensor may include a plurality of environmental sensors. The plurality of environmental sensors provided in the poultry house enable simultaneous gas concentration measurement at different measurement points in the poultry house. Accordingly, even when gas concentrations vary with time, high-concentration regions can be accurately estimated.

The circulation device may include a plurality of air blowers, and the control unit may control a first air blower closest to the high-concentration region among the plurality of air blowers to increase the air volume in the high-concentration region. The use of a first air blower closest to the high-concentration region enables efficient diffusion of the gas in the high-concentration region, thereby reducing the gas concentration.

The control unit may control an airflow direction of the first air blower to direct air from another region toward the high-concentration region. By controlling an airflow direction of the first air blower to direct air from a region in which the gas concentration is low toward the high-concentration region, air of low gas concentration is supplied to the high-concentration region, and the high-concentration gas can be efficiently diluted.

The control unit may control an airflow direction of the first air blower to direct air from the high-concentration region toward another region. By controlling an airflow direction of the first air blower to direct air from the high-concentration region in which the gas concentration is high toward another region around the region, the air in which the gas concentration is high can be efficiently diffused in the region around the region.

Said another region may be a region in which the gas concentration is lowest in regions surrounding the high-concentration region. By controlling an airflow direction of the first air blower to direct air between the high-concentration region and a region in which the gas concentration is lowest in regions surrounding the high-concentration region, the gas concentration in the high-concentration region can be efficiently reduced.

The estimation unit may define a plurality of regions each surrounded by a plurality of environmental sensors disposed to be adjacent to each other as estimation regions, and estimate the gas concentrations with respect to the estimation regions, and the control unit may control the circulation device such that air flows from the low-concentration region in which the estimated gas concentration is relatively low toward a high-concentration region in which the estimated gas concentration is relatively high. By estimating the gas concentrations for respective estimation regions, and directing air from a region in which the gas concentration is relatively low toward the high-concentration region, the high-concentration gas can be efficiently diluted.

The estimation unit may define a plurality of regions each surrounded by a plurality of environmental sensors disposed to be adjacent to each other as estimation regions, and estimate the gas concentrations with respect to the estimation regions, and the control unit may control the circulation device such that air flows from the high-concentration region in which the estimated gas concentration is relatively high toward a low-concentration region in which the estimated gas concentration is relatively low. By estimating the gas concentrations for respective estimation regions, and directing air from the high-concentration region in which the gas concentration is relatively high toward a low-concentration region, the high-concentration gas can be efficiently diffused.

The estimation unit may estimate the gas concentrations of the estimation regions by calculating the average values of the gas concentrations measured by the plurality of environmental sensors surrounding the estimation regions respectively. By using average values as the gas concentrations in the estimation regions, even if one environmental sensor malfunctions, measurement results from other environmental sensors can be used, thereby enhancing reliability through redundancy.

A reception unit configured to receive the gas concentrations measured by a mobile beacon and the measurement points of the gas concentrations may be provided, and the estimation unit may estimate the high-concentration region based on the gas concentrations measured by the plurality of environmental sensors, the measurement points, the gas concentrations measured by the mobile beacon, and the measurement points of the gas concentrations. The high-concentration region in the poultry house can be estimated more accurately by using the gas concentrations measured by a mobile beacon at measurement points at which the environmental sensors are not provided, in addition to the gas concentrations measured by the fixed environmental sensors.

A reception unit configured to acquire weather information on areas around the poultry house may be provided, and the control unit, based on the weather information acquired by the reception unit, may determine a likelihood of high temperature and/or high humidity inside the poultry house, and issue a warning when the likelihood is high. By issuing a warning when the likelihood of high temperature and/or high humidity inside the poultry house is high, a region that is likely to be a gas source can be treated depending on the degree of danger to become a high-concentration region. Accordingly, the poultry house can be properly managed to suppress the occurrence of the generation of high concentrations of gas that adversely affect the health of the chickens.

The poultry house may be a windowless poultry house including a ventilation mechanism having air intake ports and exhaust sections, the control unit may control the ventilation mechanism such that the temperature inside the poultry house is within a predetermined temperature range, and the estimation unit may estimate the high-concentration region based on the gas concentration, the position of the environmental sensor, the positions of the air intake ports, and the positions of the exhaust sections.

By using positions of air intake ports and exhaust sections that determine airflow in a windowless poultry house, in addition to the gas concentrations and the position of the environmental sensor, the accuracy in estimating the high-concentration region can be increased. In addition, the average gas concentration in the poultry house can be maintained at a low level, and the occurrence of locally elevated gas concentration can be suppressed. Furthermore, especially during cold periods, negative impacts on chicken growth and increases in chicken mortality caused by a drop in the temperature inside the poultry house, due to drawing in cold outside air and exhausting warm inside air, can be reduced.

The gas concentration may be ammonia gas concentration or carbon dioxide concentration. By suppressing locally elevated concentrations of ammonia gas or carbon dioxide to maintain the environment in the poultry house in good condition, chicken mortality can be reduced, thereby increasing productivity.

A method of controlling air circulation in a poultry house including a circulation device configured to generate wind to circulate air in the poultry house is provided. The method includes measuring gas concentrations at a plurality of measurement points in the poultry house, estimating a high-concentration region in which the gas concentration is higher than in surrounding regions in the poultry house based on the plurality of gas concentrations and positions of the measurement points, and controlling the circulation device to increase the air volume in the high-concentration region.

By suppressing locally elevated concentrations of toxic gas, the occurrence of high concentrations of toxic gas that causes chicken deaths in the poultry house can be suppressed. Accordingly, chicken mortality can be reduced without drawing in outside air through ventilation.

### Advantageous Effects of Invention

A poultry house according to an aspect of the invention can prevent an increase in gas concentration in a high-concentration region from reaching a level that adversely affects chicken growth, without drawing in cold outside air when the temperature outside the poultry house is low. Accordingly, the environment in the poultry house can be maintained in good condition without using a ventilation device including heat exchangers that requires high installation costs.

### Brief Description of Drawings

[Fig. 1] Fig. 1 is a functional block diagram illustrating a configuration of a poultry house according to a first embodiment.
[Fig. 2] Fig. 2 is a plan view schematically illustrating an environmental management system for the poultry house.
[Fig. 3] Fig. 3 is a plan view schematically illustrating a modification of the environmental management system for the poultry house.
[Fig. 4] Fig. 4 is a plan view of an example air circulation control method according to the modification in Fig. 3.
[Fig. 5] Fig. 5 is a plan view schematically illustrating another modification of the environmental management system for the poultry house.
[Fig. 6] Fig. 6 is a functional block diagram illustrating a configuration of a poultry house and a mobile beacon according to a second embodiment.
[Fig. 7] Fig. 7 is a plan view schematically illustrating an environmental management system for the poultry house.
[Fig. 8] Fig. 8 is a functional block diagram illustrating a configuration of a poultry house and a mobile beacon according to a modification.
[Fig. 9] Fig. 9 is a plan view of an example air circulation control method according to the modification in Fig. 8.
[Fig. 10] Fig. 10 is a plan view schematically illustrating a tunnel ventilation system for a windowless poultry house.
[Fig. 11] Fig. 11 is a plan view schematically illustrating an environmental management system for the windowless poultry house.
[Fig. 12] Fig. 12 is a flowchart illustrating an air circulation control method for a poultry house.

### Description of Embodiments

### (First Embodiment)

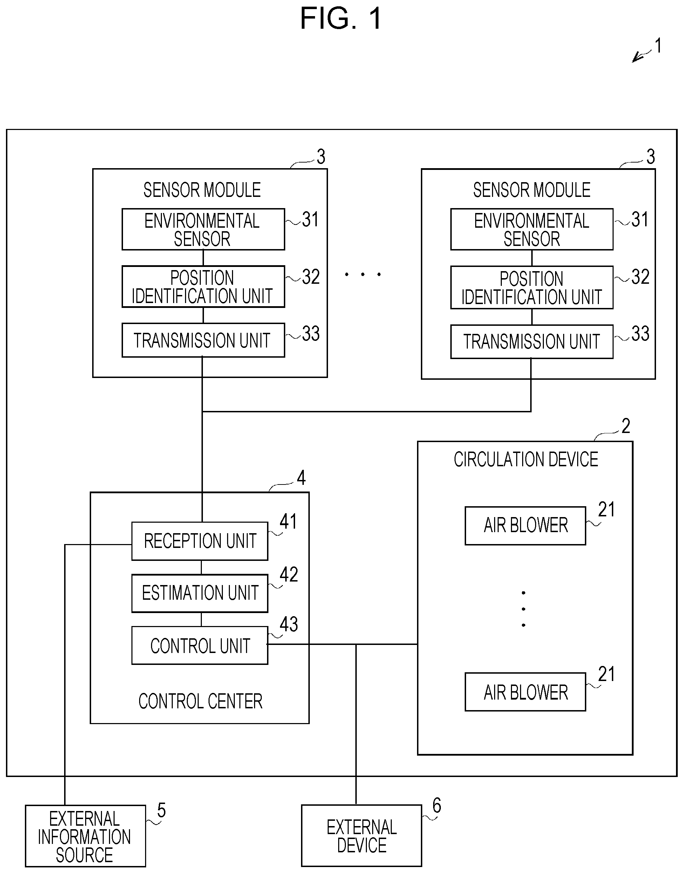

Hereinafter, embodiments of the present invention will be described with reference to the attached drawings. In each drawing, the same numerals are given to the same components, and their descriptions are omitted. In addition, XY coordinates that defines directions are shown as appropriate. Fig. 1 is a functional block diagram illustrating a configuration of a poultry house 1 according to the embodiment. As illustrated in the drawing, the poultry house 1 includes a circulation device 2, a plurality of sensor modules 3, and a control center 4.

The circulation device 2 is a device that generates wind to circulate air in the poultry house 1, and includes a plurality of air blowers 21. Each air blower 21 is capable of changing at least one of airflow direction and air volume. The air blower 21 is a fan, a circulator, or the like.

The sensor module 3 includes an environmental sensor 31, a position identification unit 32, and a transmission unit 33, and measures environmental data in the poultry house 1. Since each of the plurality of sensor modules 3 includes the environmental sensor 31, the poultry house 1 is provided with a plurality of environmental sensors 31.

The environmental sensor 31 is an element capable of measuring gas concentrations such as ammonia gas concentrations, carbon dioxide concentrations, or the like. An example element that measures ammonia gas concentrations is a semiconductor-type gas detection element. Such a semiconductor-type gas detection element detects ammonia gas by sensing a change in resistance caused by the transfer of electrons that occurs when ammonia gas comes into contact with a gas-sensing portion that includes a metal oxide semiconductor as a main component. An example element that measures carbon dioxide concentrations is a non-dispersive infrared (NDIR) element, which measures a carbon dioxide concentration based on the amount of infrared radiation absorbed by carbon dioxide. It should be noted that the elements used for measuring gas concentrations are not limited to these examples.

The environmental sensor 31 may be capable of measuring environmental data such as temperature, humidity, airflow direction, airflow speed, or the like, in addition to the above gas concentrations. In addition to the element that measures gas concentrations, the environmental sensor 31 may include an element capable of measuring respective environmental data so that the environmental sensor 31 can measure such environmental data.

The position identification unit 32 is a device capable of identifying the position of the environmental sensor 31, and for example, a global positioning system (GPS) transmitter, a chip that stores positional information, or the like may be used.

The transmission unit 33 transmits measurement results and positional information obtained by the environmental sensor 31 to the control center 4, and may employ a wireless method or a wired method. Example standards of wireless methods include Blue tooth (BT, registered trademark), Bluetooth Low Energy (BLE, registered trademark), Wi-Fi (registered trademark), and the like. Modules capable of communicating according to such standards can be used as the transmission unit 33. The transmission unit 33 may transmit information directly to a reception unit 41 of the control center 4 or may transmit information via lines such as a telephone, an intranet, the Internet, or the like,

The control center 4 includes the reception unit 41, an estimation unit 42, and a control unit 43, and receives data transmitted from the sensor module 3, processes received data, and controls the circulation device 2.

The reception unit 41 receives data measured by the environmental sensor 31 and positional data that are transmitted from the sensor module 3, and can use a module or the like compatible with the specifications of the transmission unit 33 of the sensor module 3.

Each of the estimation unit 42 and the control unit 43 may be a central processing unit (CPU) or a similar component, and can be implemented in the control center 4 as software or a part of software. The estimation unit 42 estimates respective gas concentrations for regions in the poultry house 1 based on gas concentrations measured by the plurality of environmental sensors 31 and positions of the environmental sensors 31 identified by the position identification units 32, and maps the gas concentration in the poultry house 1, thereby indicating a high-concentration region in which the gas concentration is higher than in the surrounding regions.

The control unit 43 circulates air in the poultry house 1 by controlling each air blower 21 in the circulation device 2, which generates an airflow in the poultry house 1. The control unit 43 controls the circulation device 2 to increase the air volume in a high-concentration region based on gas concentrations in the poultry house 1 that have been mapped by the estimation unit 42. In other words, the control unit 43 controls the circulation device 2 such that any of the air blowers 21 in the circulation device 2 directs air toward a high-concentration region. With this configuration, when a high-concentration region in which the gas concentration is high is generated in the poultry house 1, the gas in the high-concentration region can be diluted or diffused. Accordingly, in the poultry house 1, it is possible to prevent harmful gases such as ammonia gas from reaching concentrations that may adversely affect the health of the chickens. In addition, dilution or diffusion of a gas in a high-concentration region can be performed without lowering the temperature inside the poultry house to levels that adversely affect the growth of the chickens or increase the chicken mortality.

In the poultry house 1, to prevent locally elevated concentrations of harmful gases, it is effective to control an air blower (first air blower) 21 that is closest to a high-concentration region among the plurality of air blowers 21 to increase the air volume in the high-concentration region.

To increase the air volume in a high-concentration region, for example, by using the control unit 43, the direction of airflow from the air blower (first air blower) 21 that is closest to the high-concentration region may be directed toward the high-concentration region from a region other than the high-concentration region. Alternatively, airflow may be directed from the high-concentration region toward another region. By reducing the gas concentration in the other region to become the lowest gas concentration in regions around the high-concentration region, the gas in the high-concentration region can be effectively diluted or diffused.

The poultry house 1 according to the embodiment measures gas concentrations at a plurality of measurement points, estimates a high-concentration region in which the gas concentration is relatively high, and controls the air blowers 21 in the circulation device 2 to dilute and diffuse air in the high-concentration region, and thereby preventing locally elevated concentrations of toxic gases. In other words, since the air inside the poultry house 1 is not discharged to the outside and the outside air is not drawn in, the temperature inside the poultry house 1 does not drop when the concentration of a toxic gas is reduced, even when the outside temperature is low. In addition, the cost of installing and operating the circulation device 2 is lower than that of ventilation devices that use heat exchangers. Accordingly, the costs required to increase chicken productivity can be reduced compared to known systems.

The control center 4 is capable of acquiring information from an external information source 5 and based on the acquired information, issuing a warning to an external device 6. For example, the control center 4 acquires weather information on areas around the poultry house 1 from the external information source 5 by using the reception unit 41. Then, based on the weather information acquired by the reception unit 41, the control unit 43 determines the likelihood of high temperature and/or high humidity inside the poultry house 1. When the likelihood of high temperature and/or high humidity inside the poultry house 1 is high, the control unit 43 issues a warning to the external device 6. The external device 6 may be, for example, a display, speaker, computer, or portable terminal such as a smart phone, which alerts the user with a message, image, sound, email, notification, or the like.

The manager of the poultry house 1 or others can recognize through the warning issued to the external device 6 that conditions inside the poultry house 1 are likely to increase gas concentrations. This enables the implementation of various countermeasures to prevent the concentration of toxic gases such as ammonia gas from increasing inside the poultry house 1. Such countermeasures include maintaining the bedding material (e.g., stirring or adding dry bedding), changing the installation locations or the number of the air blowers 21 in the circulation device 2, increasing the air volume from the air blowers 21, or other measures. With this configuration, for example, the generation of a region of a high ammonia gas concentration caused by a large amount of ammonia gas generated from chicken manure can be suppressed, and appropriate countermeasures can be taken when such a region of a high ammonia gas concentration is generated.

When weather forecasts predicting high temperature or humidity for the following day or for several hours ahead in the area where the poultry house 1 is located are acquired from the external information source 5, which is connected through the Internet or the like, alerts can be issued in advance, thereby enabling countermeasures to be taken in advance to suppress elevated gas concentrations. Accordingly, issuing alerts contributes to enhancing chicken productivity.

It should be noted that when temperature and humidity are compared, the increase in ammonia gas concentration inside the poultry house 1 is likely to be greater under high humidity than under high temperature. Accordingly, the control unit 43 may acquire only humidity information from the external information source 5 and issue an alert to the external device 6 when humidity is likely to increase.

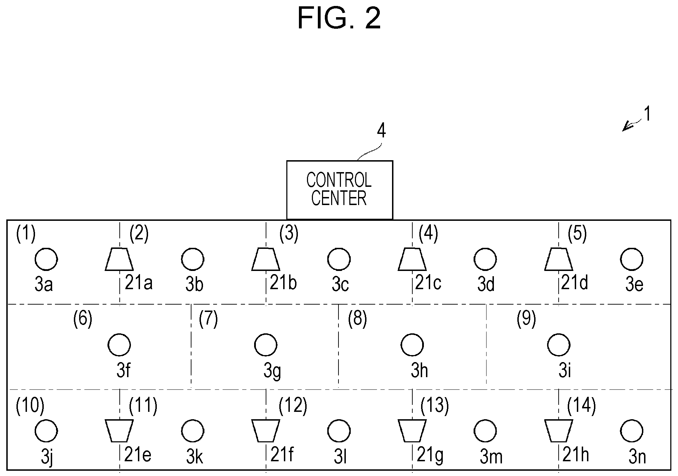

Fig. 2 is a view schematically illustrating an environmental management system for the poultry house 1. In the example illustrated in the drawing, the poultry house 1 is divided into estimation regions (1) to (14) that surround sensor modules 3a to 3n respectively. The estimation unit 42 (see Fig. 1) in the control center 4 maps gas concentrations in the estimation regions (1) to (14), based on measurement results from the sensor modules 3a to 3n, such that differences in gas concentration inside the poultry house 1 can be identified. In other words, the estimation unit 42 allocates the measurement results of the sensor modules 3a to 3n as gas concentrations to the respective estimation regions (1) to (14). The control unit 43 (see Fig. 1) in the control center 4 then controls the air volume or the airflow direction of the air blowers 21a to 21h in the circulation device 2 so as to increase the air volume in an estimation region in which the gas concentration is high.

For example, when gas at a high concentration is detected by the sensor module 3g, the air blowers 21a to 21h are controlled so as to increase the air volume in the estimation region (7). More specifically, the airflow from the air blowers 21b and 21f, which are disposed in the vicinity of the estimation region (7), is directed toward the estimation region (7) to strengthen the airflow and increase the air volume in the estimation region (7). Such control enables efficient dilution of ammonia gas and other substances by using the air blowers 21b and 21f disposed near the estimation region in which the gas concentration has been estimated to be high, thereby lowering the gas concentration. It should be noted that "increase the air volume" in a region refers to increasing the amount of air moving per unit time in the region.

Gas concentrations in regions that surround the estimation region (7) in which the gas concentration is high may be compared, and among the surrounding estimation regions (2), (3), (6), (8), (11), and (12), air may be directed from an estimation region in which the gas concentration is lowest toward the estimation region (7). Alternatively, air may be directed from the estimation region (7) toward an estimation region in which the gas concentration is lowest. Such control enables efficient reduction of gas concentration in the estimation region (7) in which the gas concentration is high.

When the gas concentration in the estimation region (12) is lowest among the estimation regions (2), (3), (6), (8), (11), and (12), the airflow direction of the air blower 21b may be adjusted such that air is directed from the estimation region (7) toward the estimation region (12). Alternatively, air may be directed from the estimation region (12) toward the estimation region (7). In addition to the air blower 21b, the airflow direction or the air volume of an air blower 21 other than the air blower 21b may be adjusted.

When there are a plurality of estimation regions in which gas concentrations are similarly low, air may be directed between a region having a larger area in plan view and the estimation region (7). In the region having a larger area in plan view, the amount of air (volume) is large, and accordingly, the gas concentration in the estimation region in which the gas concentration is high can be effectively reduced.

### (Modifications)

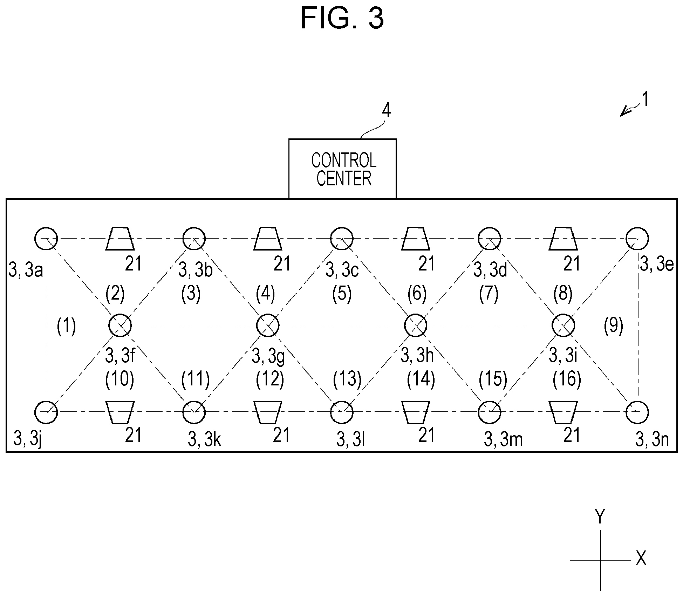

Fig. 3 is a plan view schematically illustrating a modification of the environmental management system for the poultry house 1. In this modification illustrated in the drawing, the sensor modules 3 are disposed in three lines. The sensor modules 3 include the environmental sensors 31 disposed at equal intervals in the X direction, which is a long-side direction. These three lines of the sensor modules 3 are disposed at equal intervals in the Y direction. More specifically, the lines in which a plurality of sensor modules 3 are disposed in the X direction, that is, a line of the sensor modules 3a to 3e, a line of the sensor modules 3f to 3i, and a line of the sensor modules 3j to 3n are disposed at equal intervals in the Y direction.

The sensor modules 3 of the lines adjacent to each other in the Y direction are disposed such that the sensor modules 3 in one line are shifted in the X direction with respect to the sensor modules 3 in the other line respectively. More specifically, in the X direction, at midpoints between the adjacent sensor modules 3 in one line, the sensor modules 3 in the other line are disposed. When viewed in the Y direction, at the midpoints of the adjacent sensor modules 3a, 3b, 3c, 3d, and 3e of the line disposed in the X direction, the sensor modules 3f, 3g, 3h, and 3i of the adjacent line are disposed. In addition, when viewed in the Y direction, the sensor modules 3j, 3k, 3l, 3m, and 3n of the other adjacent line are disposed to overlap the sensor modules 3a, 3b, 3c, 3d, and 3e.

In this modification, regions each surrounded by the environmental sensors 31 of three adjacent sensor modules 3 disposed as described above are referred to as estimation regions (1) to (16). The estimation unit 42 in the control center 4 estimates the gas concentrations in the plurality of estimation regions (1) to (16), respectively. In this modification, for example, the region surrounded by the sensor modules 3b, 3f, 3g, and 3k is divided into two regions in the Y direction and thereby the estimation region (3) and the estimation region (11) are defined. However, the region may be divided into two regions in the X direction and two estimation regions may be defined.

In this embodiment (configuration in Fig. 3), the adjacent sensor modules 3 are sensor modules 3, among the sensor modules 3 that are disposed on the same straight lines parallel with each other in the X direction and the same straight lines parallel with each other in the Y direction, and among the sensor modules 3 that are disposed at positions closest in each of the XY directions (four directions) and the sensor modules that are disposed at positions closest in each of the diagonal top and bottom directions on the paper, sensor modules 3 that are disposed at closest positions in the respective directions.

In Fig. 3, the sensor module 3a and the sensor module 3b are sensor modules 3 adjacent to each other on the same line in the X direction. The sensor module 3a and the sensor module 3j are sensor modules 3 adjacent to each other on the same line in the Y direction. The sensor module 3f is a sensor module 3 on the adjacent line and is located between the sensor module 3a and the sensor module 3b, which are adjacent to each other on the same line. The sensor module 3f is also a sensor module 3 on the adjacent line and is located between the sensor module 3a and the sensor module 3j, which are adjacent to each other on the same line.

An adjacent sensor module 3 among sensor modules 3 of a line disposed in the X direction, and a sensor module 3 disposed at a closest position among sensor modules 3 on an adjacent line are adjacent sensor modules 3. It should be noted that when the number of sensor modules 3 that are on an adjacent line and disposed at closest positions is not two, a sensor module 3 that is disposed at a closest position among sensor modules 3 of another adjacent line is also an adjacent sensor module 3.

For example, sensor modules 3 that are closest to the sensor module 3b and on an adjacent line are two sensor modules 3, that is, the sensor modules 3f and 3g, and thus these sensor modules 3 are adjacent to the sensor module 3b. A sensor module 3 that is closest to the sensor module 3a and on an adjacent line is only the sensor module 3f. Accordingly, on another adjacent line, the sensor module 3j that is closest to the sensor module 3a is also adjacent to the sensor module 3a.

In the poultry house 1 according to the modification, the control unit 43 in the control center 4 may control the circulation device 2 such that air flows from a low-concentration region in which an estimated gas concentration is relatively low to a high-concentration region in which an estimated gas concentration is relatively high. Alternatively, the control unit 43 may control the circulation device 2 such that air flows from a high-concentration region in which an estimated gas concentration is relatively high toward a low-concentration region in which an estimated gas concentration is relatively low.

The estimation unit 42 in the control center 4, for example, estimates a gas concentration in an estimation region by calculating an average value of gas concentrations measured by the environmental sensors 31 (see Figs. 1 and 2) in a plurality of sensor modules 3 that surround the estimation region. It should be noted that in the following description, a gas concentration measured by the environmental sensor 31 is referred to as a measured value of the sensor module 3 as appropriate.

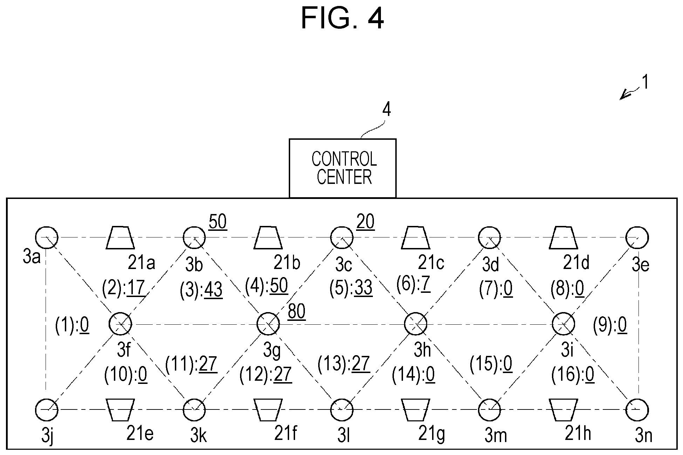

Fig. 4 is a plan view describing an air circulation control method in the poultry house 1 according to the modification in Fig. 3. A case is described below in which gas concentrations simultaneously measured by the sensor modules 3b, 3c, and 3g are 50, 20, and 80, respectively, and gas concentrations simultaneously measured by other sensor modules 3a, 3d, 3e, 3f, and 3h to 3n are 0.

In the example illustrated in Fig. 4, estimated values of the gas concentrations in the respective estimation regions (1) to (16) are as follows. The estimation region (1): 0, the estimation region (2): 17 approximately equal to ≈ 50 / 3, the estimation region (3): 43 ≈ (50 + 80) / 3, the estimation region (4): 50 = (50 + 20 + 80) / 3, the estimation region (5): 33 ≈ (20 + 80) / 3, the estimation region (6): 7 ≈ 20 / 3, the estimation region (7) to (10): 0, the estimation region (11) to (13): 27 ≈ 80 / 3, the estimation region (14) to (16): 0. Note that the underlined values in Fig. 4 indicate the measured values of the gas concentrations from the sensor modules 3b, 3c, and 3g, and the estimated gas concentrations in the respective estimation regions.

In the example illustrated in Fig. 4, only the sensor modules 3b, 3c, and 3g are detecting gas. Accordingly, it can be estimated that the gas source is located in the estimation region (4) surrounded by the adjacent sensor modules 3b, 3c, and 3g. For example, among the estimation regions (1) to (16), the estimation region (4) in which the estimated gas concentration is highest is regarded as a high-concentration region in which the gas concentration is relatively high, and other estimation regions (1) to (3) and (5) to (16) is regarded as low-concentration regions in which the gas concentrations are relatively low.

Then, by controlling the air blowers 21a to 21h to cause air movement between the high-concentration region and the low-concentration regions, the gas in the estimation region (4) is diffused or diluted, thereby reducing the gas concentration in the high-concentration region.

It should be noted that it is preferable that the estimated gas concentrations be low in the estimation regions in which air movement between the estimation region (4) is caused by the air blowers 21a to 21h. Accordingly, when the estimation regions (2), (3), (5), (6), and (11) to (13), which share at least one of the sensor modules 3b, 3c, and 3g that define the estimation region (4), are ranked in order of preference, the ranking order is the estimation region (6), the estimation region (2), the estimation regions (11) to (13), the estimation region (5), and the estimation region (3).

In the example illustrated in Fig. 4, it can be estimated that the gas source is in the estimation region (4), but in some cases, there may be a plurality of gas sources. Accordingly, for example, in consideration of a case in which there are a plurality of gas sources, among the estimation regions (1) to (16), an average value of estimated gas concentrations in estimation regions in which the estimated gas concentrations are not zero may be used as a threshold value to define high-concentration regions and low-concentration regions.

In the example illustrated in Fig. 4, the average value of the estimated gas concentrations of the estimation regions (2) to (6) and (11) to (13) in which the estimated gas concentrations are not zero is 29. By setting the threshold value to 29, the estimation regions (3) to (5) in which the estimated gas concentrations are greater than or equal to the threshold value may be defined as high-concentration regions, and the estimation regions (2), (6), and (11) to (13) in which the estimated gas concentrations are less than the threshold value may be defined as low-concentration regions. In such a case, the air blowers 21a to 21h are controlled to cause air movement between the estimation regions (3) to (5), which are defined as high-concentration regions and the estimation regions (2), (6), and (11) to (13), which are defined as low-concentration regions.

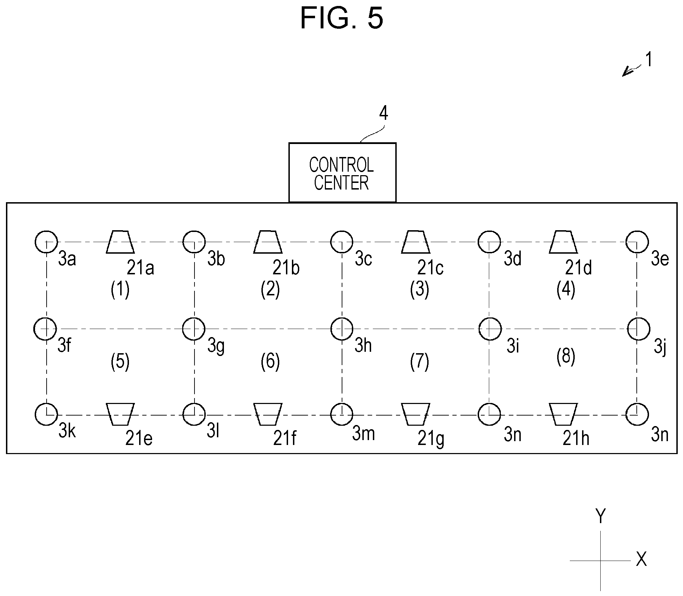

Fig. 5 is a plan view schematically illustrating a modification of the environmental management system for the poultry house 1. In this modification illustrated in the drawing, three lines of sensor modules 3a to 3e, 3f to 3j, and 3k to 3n, each of which includes the environmental sensor 31, are disposed at equal intervals in the X direction, which is a long-side direction. In addition, the sensor modules 3 on adjacent lines are disposed at the same locations in the X direction, and are disposed in straight lines in the Y direction. In other words, the sensor modules 3 are disposed in straight lines in both the X direction and the Y direction.

In the example in Fig. 5, for example, the sensor module 3a and the sensor module 3b are adjacent to each other in the X direction, and the sensor module 3f and the sensor module 3g are adjacent to each other in the X direction. In addition, the sensor module 3a and the sensor module 3f are adjacent to each other in the Y direction, and the sensor module 3b and the sensor module 3g are adjacent to each other in the Y direction. A region surrounded by these four sensor modules 3a, 3b, 3f, and 3g is the estimation region (1). Similarly, regions each surrounded by the environmental sensors 31 of four adjacent sensor modules 3 are referred to as estimation regions (2) to (8). The estimation unit 42 of the control center 4 estimates gas concentrations in the plurality of estimation regions (1) to (8) respectively.

Estimation of the gas concentrations in the estimation regions (1) to (8), definition of each of the estimation regions as a high-concentration region or a low-concentration region, control of the air blowers 21a to 21h, or the like may be performed in a similar manner as described in the above-mentioned modification.

In addition, in the modification in Fig. 5, an estimation region is a rectangular region surrounded by four sensor modules; however, an estimation region may also be two triangular regions divided by one of the diagonals of the rectangle. For example, the estimation region (1) may be divided into a triangular region having the sensor modules 3a, 3b, and 3f as vertices, and a triangular region having the sensor modules 3b, 3f, and 3g as vertices.

### (Second Embodiment)

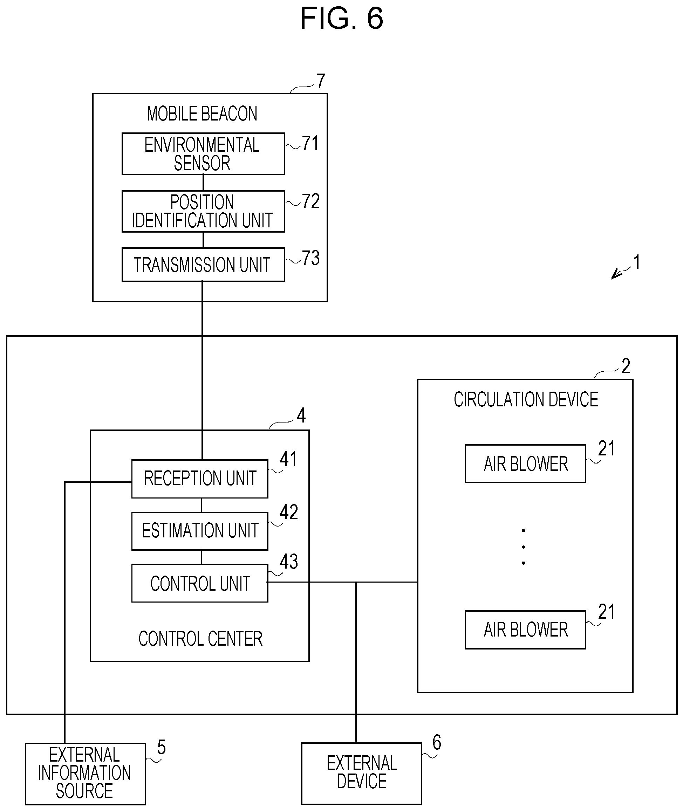

Fig. 6 is a block diagram illustrating a configuration of a poultry house 1 according to the embodiment. As illustrated in the drawing, the poultry house 1 according to the embodiment is similar to that according to the first embodiment in that the poultry house 1 includes the circulation device 2 and the control center 4, but differs from that according to the first embodiment in that the poultry house 1 does not include the sensor module 3.

The control center 4 in the poultry house 1 according to the embodiment, instead of the sensor modules 3, receives gas concentrations at a plurality of measurement points measured by a mobile beacon 7 and positional information of the measurement points at which the gas concentrations are measured. The estimation unit 42 of the control center 4 estimates a high-concentration region based on the plurality of gas concentrations measured by the mobile beacon 7 and the positions of the gas concentration measurement points.

The mobile beacon 7 includes an environmental sensor 71, a position identification unit 72, and a transmission unit 73. These components may be components similar to the environmental sensor 31, the position identification unit 32, and the transmission unit 33 according to the first embodiment.

The mobile beacon 7, for example, transmits environmental data such as gas concentrations measured by the environmental sensor 71 and position data to the control center 4 at predetermined time intervals. The mobile beacon 7 may transmit gas concentrations and position data to the control center 4 not at predetermined time intervals but at whenever gas at a concentration exceeding a threshold value is detected.

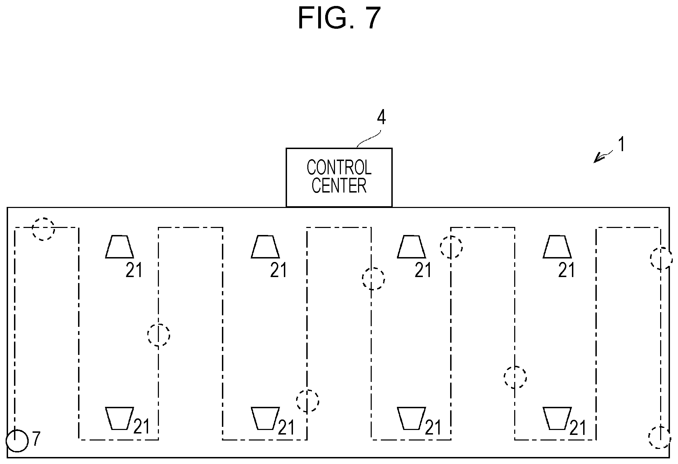

Fig. 7 is a plan view schematically illustrating an environmental management system for the poultry house 1. As illustrated in the drawing, the mobile beacon 7 moves in the poultry house 1 together with the operator or a robot along a patrol route indicated by a dash-dotted line. While the mobile beacon 7 is moving in the poultry house 1, for example, the mobile beacon 7 measures gas concentrations at predetermined time intervals, and transmits the measured gas concentrations together with position data of the measurement points to the control center 4. In this operation, the mobile beacon 7 may measure environmental data such as temperature, humidity, or the like and transmit the data in addition to the gas concentrations and position data. The control center 4 may determine positions at which gas concentrations are measured by the mobile beacon 7 based on radio waves received from the mobile beacon 7. Note that the circles drawn with dashed lines in Fig. 7 illustrate some of the positions of the mobile beacon 7 on the patrol route; however, it does not necessarily mean that gas concentration measurements are performed at the illustrated positions.

As part of the management of the poultry house 1, daily patrols are typically performed to monitor the health status of chickens and to remove any dead chickens. Therefore, during the patrols, environmental data of the poultry house 1 may be collected by moving with the mobile beacon 7, which includes the environmental sensor 71, the position identification unit 72, and the transmission unit 73.

By measuring gas concentrations using the movable mobile beacon 7 in the poultry house 1, at any desired location as necessary, gas concentrations can be measured and the measured gas concentrations can be mapped. Accordingly, more detailed and accurate maps that shows variations in gas concentration in the poultry house 1 can be created. Therefore, by using the air blowers 21 (see Fig. 6) in the circulation device 2, gas in a high-concentration region in which the gas concentration is high can be effectively diluted and diffused, and the environment in the poultry house 1 can be maintained in good condition. In addition, compared to a case in which sensor modules are disposed uniformly in the poultry house 1 as in the first embodiment, this embodiment can be implemented at a lower cost.

### (Modification)

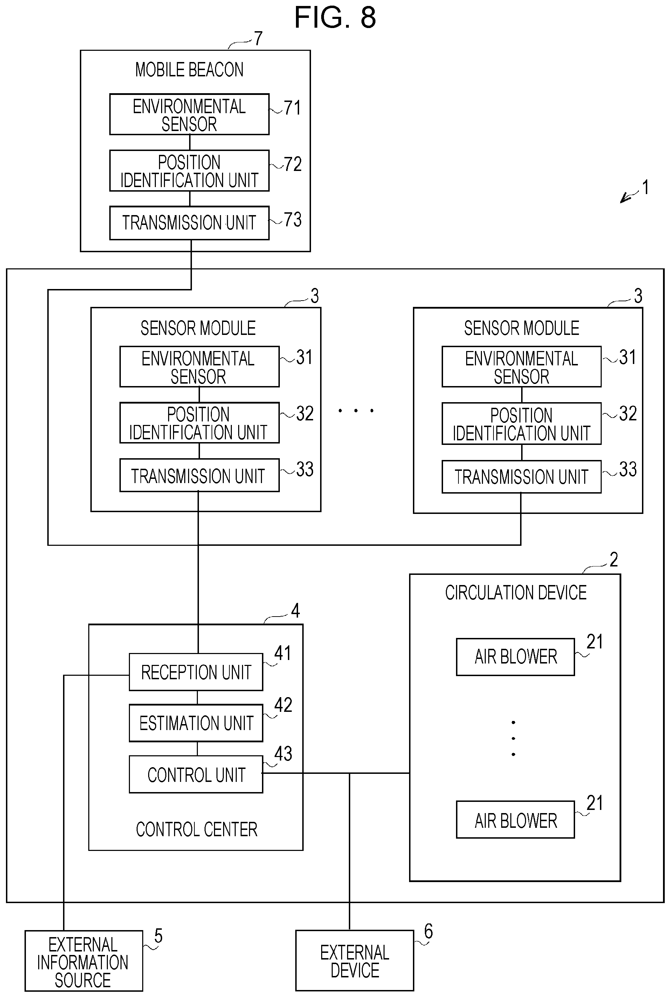

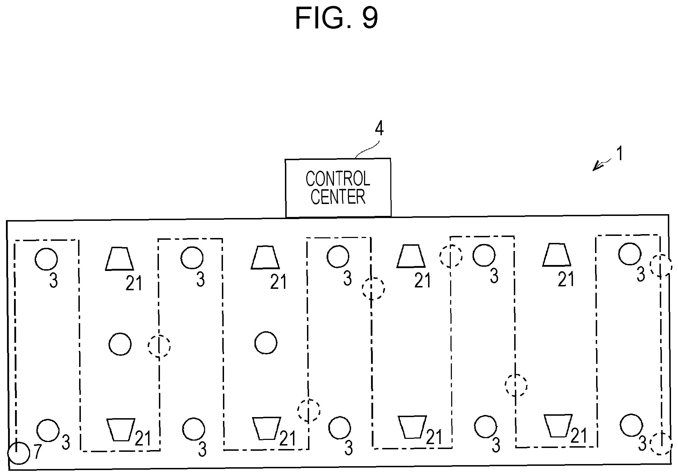

Fig. 8 is a block diagram illustrating a configuration of a poultry house 1 and a mobile beacon 7 according to a modification. Fig. 9 is a plan view of an example air circulation control method according to the modification in Fig. 8. As illustrated in the drawings, in the case in which the poultry house 1 includes a plurality of sensor modules 3, gas concentrations in the poultry house 1 may be measured by using the mobile beacon 7. In such a case, the estimation unit 42 of the control center 4 determines a high-concentration region by using gas concentrations measured by the plurality of sensor modules 3 and the mobile beacon 7 and the gas concentration measurement points. Accordingly, gas concentrations in the poultry house 1 can be determined in more detail and with greater accuracy.

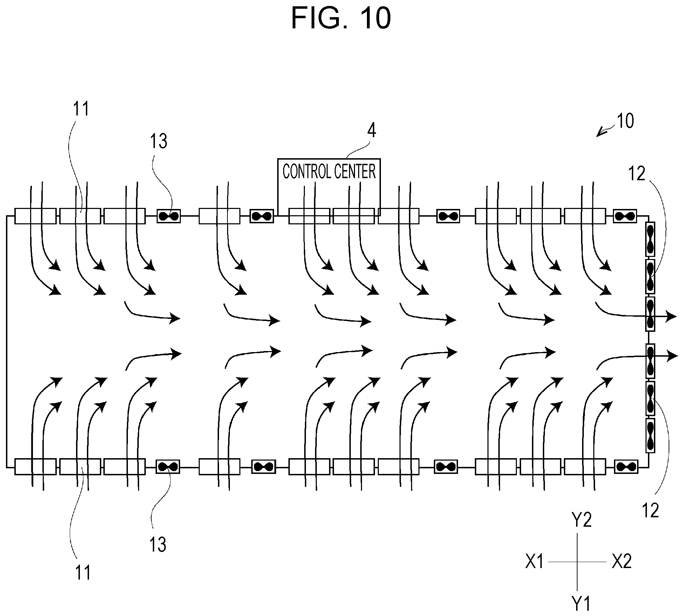

Fig. 10 is a plan view schematically illustrating a tunnel ventilation system for a windowless poultry house 10. As illustrated in the drawing, the windowless poultry house 10 includes air intake ports 11, tunnel ventilation fans 12, and side wall exhaust fans 13. The tunnel ventilation fans 12 are disposed on one wall in the X direction, which is the long-side direction, in the windowless poultry house 10, and function as exhaust sections. The side wall exhaust fans 13 are disposed on both walls in the Y direction in the windowless poultry house 10 and are used as exhaust sections as necessary.

Note that the tunnel ventilation system illustrated in Fig. 10 is not intended to perform extensive air exchange, that is, to exchange air in the poultry house 1 with fresh outside air over a wide area and in large quantities as in the ventilation system described in Patent Literature 1. As in the embodiments described above, without performing extensive air exchange, chicken mortality can be suppressed by diffusing or diluting gas in a region in which the gas concentration is high.

However, simply diffusing or diluting air in a region in which the gas concentration is high in the poultry house may cause a gradual increase in the average gas concentration in the poultry house. When the average gas concentration in the air in the poultry house is high, even if gas in a region in which the gas concentration is high in the poultry house is diffused or diluted, the effectiveness in suppressing chicken mortality is reduced. Accordingly, a tunnel ventilation system provided to draw in fresh air without causing extreme changes in room temperature is the tunnel ventilation system illustrated in Fig. 10.

The windowless poultry house 10 typically uses the air intake ports 11 and the tunnel ventilation fans 12 as a ventilation mechanism. More specifically, the tunnel ventilation fans 12 are activated to exhaust air inside the windowless poultry house 10 to the outside and draw in outside air through the air intake ports 11 provided on the side walls. With this configuration, a unidirectional airflow from the X1 to X2 direction is generated in the windowless poultry house 10. Accordingly, the control unit 43 (see Fig. 1) in the control center 4 controls the air intake ports 11 and the tunnel ventilation fans 12 such that the temperature inside the windowless poultry house 10 is within a predetermined temperature range.

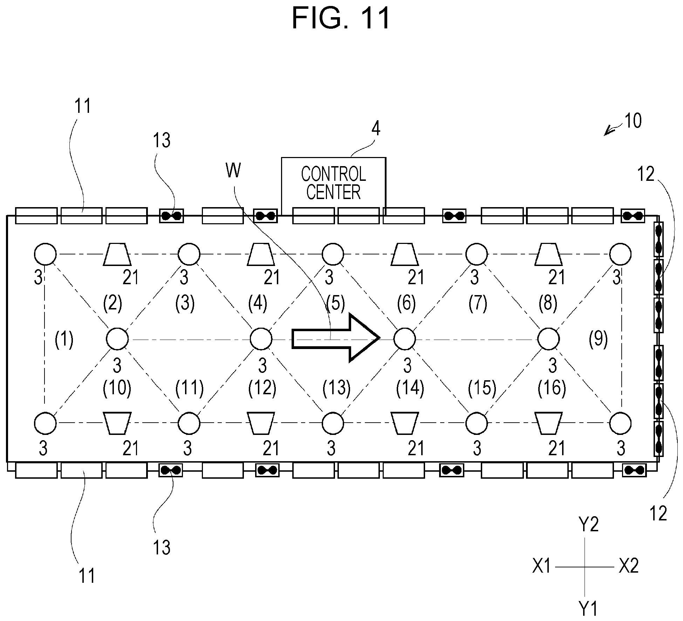

Fig. 11 is a plan view schematically illustrating an environmental management system for the windowless poultry house 10. As in the windowless poultry house 10, when the tunnel ventilation fans 12 are disposed on one (X2 side) wall in the long-side direction (X direction), and the air intake ports 11 are disposed at the same positions on the both walls in the short-side direction (Y direction), an airflow W from the X1 to X2 direction is generated in the windowless poultry house 10, as indicated by the white arrow in the drawing.

In the case of the windowless poultry house 10, the positions of the air intake ports 11 and the positions of the tunnel ventilation fans 12 determine the airflow in the poultry house. In the windowless poultry house 10 in which the airflow W is provided by tunnel ventilation as described above, gas concentrations measured by the environmental sensors 31 in the sensor modules 3 are affected by the airflow W. Accordingly, when the airflow W is provided, a high-concentration region in which gas concentration is high estimated from the measured values provided from the environmental sensors 31 is shifted from the center of the actual high-concentration region. In other words, the actual high-concentration region is a position that correspond to a distance in the opposite direction of the distance in which the gas has traveled due to the airflow W.

Therefore, the estimation unit 42 (see Fig. 1) in the control center 4 uses the airflow W for the estimation of a high-concentration region, in addition to the gas concentrations measured by the environmental sensors 31 in the sensor modules 3 and the positions of the environmental sensors 31 identified by the position identification unit 32. The airflow W can be determined based on the positions of the air intake ports 11 and the positions of the tunnel ventilation fans 12 disposed in the windowless poultry house 10. As described above, the use of the airflow W increases the accuracy of estimating high-concentration regions.

The direction and speed of the airflow W in the windowless poultry house 10 are determined by the positions and shapes of the air intake ports 11 and the tunnel ventilation fans 12, operating conditions of the tunnel ventilation fans 12, and other factors. Accordingly, the direction and speed of the airflow W can be determined based on the positions of the air intake ports 11 and the tunnel ventilation fans 12, and other factors.

In addition, the direction and speed of the airflow W may be measured by the environmental sensors 31 in the sensor modules 3. In such a case, the averages of the directions and speeds of the airflow W measured by the plurality of environmental sensors 31 may be used as the direction and speed of the airflow W in an estimation region estimated by the plurality of environmental sensors 31.

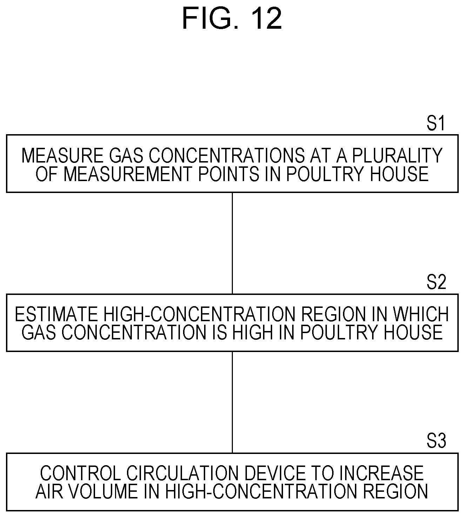

Fig. 12 is a flowchart illustrating an air circulation control method for a poultry house. The air circulation control method for a poultry house according to the embodiment includes a circulation device that generates wind to circulate air in the poultry house. First, gas concentrations are measured at a plurality of measurement points in the poultry house (gas concentration measurement step, S1). Based on the plurality of gas concentrations measured in S1 and the measurement points, a high-concentration region in which the gas concentration is higher than in the surrounding regions is estimated (high-concentration region estimation step, S2). The circulation device is controlled to increase the air volume in the high-concentration region estimated in S2 (circulation control step S3).

According to the air circulation control method in the poultry house according to the embodiment, a high-concentration region in which the gas concentration is higher than in the surrounding regions is estimated based on the gas concentrations measured at a plurality of measurement points, and the circulation device is controlled to increase the air volume in the high-concentration region, and thereby the gas concentration can be efficiently reduced.

The embodiments disclosed in this specification are in all respects illustrative and not limited to these embodiments. The scope of the invention is not limited to the embodiments described above, but is defined by the claims, and is intended to include all modifications within the meaning and scope equivalent to the claims.

### Industrial Applicability

The present invention is useful as a poultry house for raising chickens for egg production or meat and as a method of controlling air circulation in a poultry house.

### Reference Signs List

- 1:: poultry house
- 2:: circulation device
- 3:: sensor module
- 3a to 3n:: sensor module
- 4:: control center
- 5:: external information source
- 6:: external device
- 7:: mobile beacon
- 10:: windowless poultry house
- 11:: air intake port
- 12:: tunnel ventilation fan
- 13:: side wall exhaust fan
- 21:: air blower
- 21a to 21h:: air blower
- 31:: environmental sensor
- 32:: position identification unit
- 33:: transmission unit
- 41:: reception unit
- 42:: estimation unit
- 43:: control unit
- 71:: environmental sensor
- 72:: position identification unit
- 73:: transmission unit
- W:: airflow

## Claims

1. A poultry house comprising:
a circulation device configured to generate wind to circulate air in the poultry house;
an environmental sensor configured to measure gas concentration;
an estimation unit configured to estimate a high-concentration region in which the gas concentration is higher than in surrounding regions in the poultry house based on the gas concentrations measured by the environmental sensor at a plurality of measurement points and the positions of the measurement points of the environmental sensor; and
a control unit configured to control the circulation device to increase air volume in the high-concentration region.

2. The poultry house according to claim 1, wherein the environmental sensor comprises a plurality of environmental sensors.

3. The poultry house according to claim 1, wherein
the circulation device includes a plurality of air blowers, and
the control unit controls a first air blower closest to the high-concentration region among the plurality of air blowers to increase the air volume in the high-concentration region.

4. The poultry house according to claim 3, wherein the control unit controls an airflow direction of the first air blower to direct air from another region toward the high-concentration region.

5. The poultry house according to claim 3, wherein the control unit controls an airflow direction of the first air blower to direct air from the high-concentration region toward another region.

6. The poultry house according to claim 4 or claim 5, wherein said another region is a region in which the gas concentration is lowest in regions surrounding the high-concentration region.

7. The poultry house according to claim 1, wherein
the estimation unit defines a plurality of regions each surrounded by a plurality of environmental sensors disposed to be adjacent to each other as estimation regions, and estimates the gas concentrations with respect to the estimation regions, and
the control unit controls the circulation device such that air flows from a low-concentration region in which the estimated gas concentration is relatively low toward the high-concentration region in which the estimated gas concentration is relatively high.

8. The poultry house according to claim 1, wherein
the estimation unit defines a plurality of regions each surrounded by a plurality of environmental sensors disposed to be adjacent to each other as estimation regions, and estimates the gas concentrations with respect to the estimation regions, and
the control unit controls the circulation device such that air flows from the high-concentration region in which the estimated gas concentration is relatively high toward a low-concentration region in which the estimated gas concentration is relatively low.

9. The poultry house according to claim 7 or 8, wherein the estimation unit estimates the gas concentrations of the estimation regions by calculating the average values of the gas concentrations measured by the plurality of environmental sensors surrounding the estimation regions respectively.

10. The poultry house according to claim 2, further comprising:
a reception unit configured to receive the gas concentrations measured by a mobile beacon and the measurement points of the gas concentrations, wherein
the estimation unit estimates the high-concentration region based on the gas concentrations measured by the plurality of environmental sensors, the measurement points, the gas concentrations measured by the mobile beacon, and the measurement points of the gas concentrations.

11. The poultry house according to claim 1, further comprising:
a reception unit configured to acquire weather information on areas around the poultry house, wherein
the control unit, based on the weather information acquired by the reception unit, determines a likelihood of high temperature and/or high humidity inside the poultry house, and issues a warning when the likelihood is high.

12. The poultry house according to claim 1, wherein
the poultry house is a windowless poultry house including a ventilation mechanism having air intake ports and exhaust sections,
the control unit controls the ventilation mechanism such that the temperature inside the poultry house is within a predetermined temperature range, and
the estimation unit estimates the high-concentration region based on the gas concentration, the position of the environmental sensor, the positions of the air intake ports, and the positions of the exhaust sections.

13. The poultry house according to claim 1, wherein the gas concentration is ammonia gas concentration or carbon dioxide concentration.

14. A method of controlling air circulation in a poultry house including a circulation device configured to generate wind to circulate air in the poultry house, the method comprising:
measuring gas concentrations at a plurality of measurement points in the poultry house;
estimating a high-concentration region in which the gas concentration is higher than in surrounding regions in the poultry house based on the plurality of gas concentrations and positions of the measurement points; and
controlling the circulation device to increase the air volume in the high-concentration region.
